# FASCICULE DE BREVET EUROPEEN

(11) **EP 1 164 535 B1**
(45) Date de publication et mention de la délivrance du brevet: **14.01.2009**
(21) Numéro de dépôt: 01410056.4
(22) Date de dépôt: 16.05.2001
(51) Int. Cl.: G06K 7/00, G06K 7/10

(54) **Dispositif de production d'un champ électromagnétique pour transpondeur**
Vorrichtung zur Erzeugung eines elektromagnetischen Feldes für Transponder
Device for generating an electromagnetic field for transponders

(30) Priorité: 17.05.2000 FR 0006301
(43) Date de publication de la demande: 19.12.2001
(73) Titulaire: STMicroelectronics S.A., 92120 Montrouge (FR)
(72) Inventeur: Wuidart, Luc, 83910 Pourrieres (FR); Bardouillet, Michel, 13790 Rousset (FR)
(74) Mandataire: de Beaumont, Michel

(56) Documents cités:
- EP-A- 0 333 388
- EP-A- 0 579 332
- EP-A- 0 645 840

## Description

La présente invention concerne des systèmes utilisant des transpondeurs électromagnétiques, c'est-à-dire des émetteurs et/ou récepteurs (généralement mobiles) susceptibles d'être interrogés, sans contact et sans fil, par une unité (généralement fixe) dite borne de lecture et/ou d'écriture. Généralement, les transpondeurs extraient l'alimentation nécessaire aux circuits électroniques qu'ils comportent d'un champ haute fréquence rayonné par une antenne de la borne de lecture et d'écriture. L'invention s'applique à de tels systèmes, qu'il s'agisse de systèmes à lecture seule, c'est-à-dire comprenant une borne se contentant de lire les données d'un ou plusieurs transpondeurs, ou de systèmes à lecture-écriture dans lesquels les transpondeurs contiennent des données qui peuvent être modifiées par la borne.

Les systèmes utilisant des transpondeurs électromagnétiques sont basés sur l'emploi de circuits oscillants comprenant un enroulement formant antenne côté transpondeur et côté borne de lecture-écriture. Ces circuits sont destinés à être couplés par champ magnétique proche lorsque le transpondeur entre dans le champ de la borne de lecture-écriture.

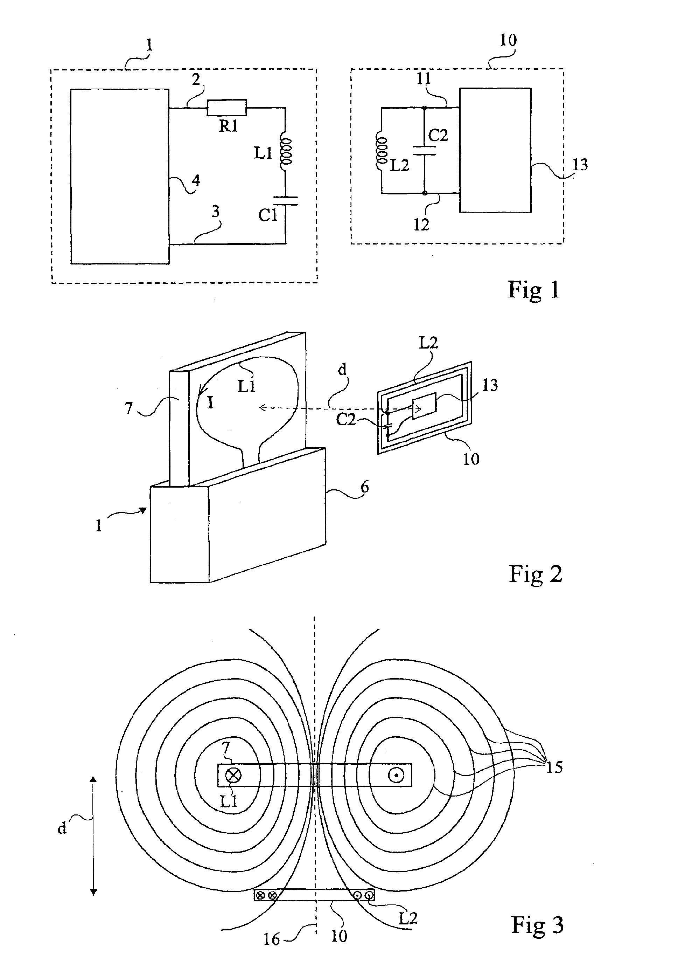

La figure 1 représente, de façon très schématique et simplifiée, un exemple classique de système d'échange de données entre une borne 1 de lecture-écriture et un transpondeur 10 du type auquel s'applique la présente invention.

Généralement, la borne 1 est essentiellement constituée d'un circuit oscillant série, formé d'une inductance L1, en série avec un condensateur C1 et une résistance R1, entre une borne 2 de sortie d'un amplificateur ou coupleur d'antenne (non représenté) et une borne 3 de référence (généralement, la masse). Le coupleur d'antenne fait partie d'un circuit 4 de commande du circuit oscillant et d'exploitation des données reçues comprenant, entre autres, un modulateur/démodulateur et un microprocesseur de traitement des commandes et des données. L'exploitation des données reçues se base sur une mesure du courant dans le circuit oscillant ou de la tension à ses bornes. Le circuit 4 de la borne communique généralement avec différents circuits d'entrée/sortie (clavier, écran, moyen d'échange avec un serveur, etc.) et/ou de traitements non représentés. Les circuits de la borne de lecture-écriture tirent généralement l'énergie nécessaire à leur fonctionnement d'un circuit d'alimentation (non représenté) raccordé, par exemple, au réseau de distribution électrique ou à des batteries.

Un transpondeur 10, destiné à coopérer avec une borne 1, comporte essentiellement un circuit oscillant parallèle formé d'une inductance L2 en parallèle avec un condensateur C2 entre deux bornes 11 et 12 d'entrée de circuits 13 de commande et de traitement. Les bornes 11 et 12 sont, en pratique, reliées à l'entrée d'un moyen de redressement (non représenté) dont des sorties constituent des bornes d'alimentation continue des circuits internes au transpondeur. Ces circuits comprennent généralement, essentiellement, un microprocesseur susceptible de communiquer avec d'autres éléments (par exemple, une mémoire), un démodulateur des signaux reçus de la borne 1 et un modulateur pour transmettre des informations à la borne.

Les circuits oscillants de la borne et du transpondeur sont généralement accordés sur une même fréquence correspondant à la fréquence d'un signal d'excitation du circuit oscillant de la borne. Ce signal haute fréquence (par exemple 13,56 MHz) sert non seulement de porteuse de transmission mais également de porteuse de téléalimentation à destination du ou des transpondeurs se trouvant dans le champ de la borne. Quand un transpondeur 10 se trouve dans le champ d'une borne 1, une tension haute fréquence est engendrée aux bornes 11 et 12 de son circuit résonnant. Cette tension, après redressement et écrêtement éventuel, est destinée à fournir la tension d'alimentation des circuits électroniques 13 du transpondeur. Pour des raisons de clarté, les moyens de redressement, d'écrêtement et de fourniture d'alimentation n'ont pas été représentés en figure 1. En retour, la transmission de données du transpondeur vers une borne s'effectue généralement en modulant la charge constituée par le circuit résonnant L2, C2. La variation de charge s'effectue au rythme d'une sous porteuse, dite de rétromodulation, de fréquence (par exemple 847,5 kHz) inférieure à celle de la porteuse.

Les antennes de la borne 1 et du transpondeur 10 sont, en figure 1, matérialisées par leurs schémas électriques équivalents, à savoir des inductances (en négligeant les résistances série). En pratique, une borne 1 a une antenne plane L1 formée de quelques spires (le plus souvent une ou deux spires) circulaires d'un diamètre relativement important (par exemple d'une valeur donnée comprise entre quelques cm et 1 m) et l'antenne L2 d'un transpondeur (par exemple, une carte du format carte de crédit) est formée de quelques spires (le plus souvent entre deux et cinq spires) rectangulaires s'inscrivant dans un diamètre relativement faible (spires de 5 à 8 cm de côté) par rapport au diamètre de l'antenne L1.

La figure 2 est une vue en perspective schématique d'une borne et d'un transpondeur illustrant un exemple classique d'antennes. Les circuits électroniques 4 de la borne 1, de même que le condensateur C1 et la résistance R1 sont généralement contenus dans un socle 6. L'antenne L1 est, par exemple, portée par une plaquette de circuit imprimé 7 saillante du socle 6. En figure 2, on suppose que l'antenne L1 est constituée d'une seule spire traversée, quand le circuit oscillant de la borne est excité par le signal haute fréquence, par un courant I. Le sens indiqué du courant I est arbitraire et il s'agit d'un courant alternatif. Côté transpondeur 10, on suppose qu'il s'agit d'une carte à puce intégrant les circuits 13 et dont l'antenne L2 comprend deux spires rectangulaires et coplanaires décrivant approximativement la périphérie de la carte 10. Le condensateur C2 représenté distinct des circuits 13 est généralement réalisé en étant intégré à la puce.

Les systèmes à transpondeurs classiques sont généralement limités en portée, c'est-à-dire qu'à une certaine distance (d, figure 2) de la borne, le champ magnétique est insuffisant pour téléalimenter correctement un transpondeur. Le champ minimal est généralement compris entre 0,1 et 1 A/m selon la consommation du transpondeur qui diffère essentiellement selon qu'il est ou non pourvu d'un microprocesseur.

La portée de téléalimentation dépend de la quantité de flux magnétique émis par la borne ou lecteur, qui peut être "captée" par un transpondeur. Cette quantité dépend directement du facteur de couplage entre les antennes L1 et L2, qui représente la proportion de flux récupérée par le transpondeur. Le facteur de couplage (compris entre 0 et 1) dépend de plusieurs facteurs parmi lesquels, essentiellement, la mutuelle inductance entre les antennes L1 et L2 et la taille respective des antennes, et l'accord des circuits oscillants sur la fréquence de la porteuse d'excitation haute fréquence. Pour des tailles et une mutuelle inductance données, le couplage est maximal quand les circuits oscillants de la borne et du transpondeur sont tous deux accordés sur la fréquence de la porteuse de téléalimentation.

La figure 3 représente schématiquement un exemple classique de répartition des lignes de champ magnétique produites par une borne 1 dans le champ de laquelle se trouve un transpondeur 10. La représentation de la figure 3 correspond, par exemple, à une coupe de la représentation de la figure 2 incluant les deux antennes L1 et L2. En figure 3, on a indiqué un sens arbitraire de circulation du courant I dans les inductances L1 et L2. Comme le courant est alternatif, il s'agit, par exemple, de son sens en un instant donné. Les lignes 15 de champ magnétique s'enroulent autour du conducteur constitutif de l'antenne L1 et sont, dans la vue en coupe de la figure 3, symétriques par rapport à un axe 16 de symétrie de l'antenne L1. Comme l'illustre cette figure, le transpondeur 10 capte de l'énergie quand son antenne L2 se trouve dans le champ de la borne.

Une solution classique pour augmenter la portée consiste à augmenter la taille de l'antenne L1 de la borne. Pour préserver le champ magnétique, on doit alors augmenter l'intensité du courant du signal d'excitation dans le même rapport. Un premier inconvénient d'une telle solution est qu'elle augmente la puissance nécessaire d'excitation du système. Un deuxième inconvénient d'une telle solution est qu'une telle augmentation de courant reste limitée par la constitution du générateur et requiert un dimensionnement important des composants (en particulier, une section importante du conducteur constitutif de l'antenne L1). De plus, les pertes sont proportionnelles au carré du courant.

Pour tenter de pallier ce deuxième inconvénient, une solution connue est d'utiliser, pour des antennes relativement grandes (par exemple, de type portique), un circuit oscillant parallèle côté borne. Ce circuit est alors attaqué en tension et non plus en courant, ce qui conduit à une augmentation plus importante du courant dans l'antenne (montée en circuit dit "bouchon") sans que ce courant circule dans le générateur. Une telle solution présente l'avantage de limiter les pertes. Toutefois, cette solution entraîne toujours une augmentation de la dépense énergétique (due à l'augmentation de tension pour augmenter la puissance). En outre, le champ maximum au centre de l'antenne L1 est généralement fixé par des normes.

Le document EP-A-0333388 décrit un circuit de transfert d'énergie à deux enroulements partageant un même noyau magnétique, qui sont mécaniquement et électriquement liés, et qui ne sont pas placés à distance l'un de l'autre.

La présente invention vise à pallier les inconvénients des systèmes à transpondeurs classiques.

L'invention vise, en particulier, à améliorer la portée et/ou le niveau de signal disponible à une distance donnée, d'une borne de lecture et/ou d'écriture de transpondeur.

L'invention vise également à proposer une solution qui soit compatible avec les systèmes existants. Plus précisément, l'invention vise à proposer une solution ne nécessitant aucune modification des transpondeurs et, de préférence, aucune modification de la borne de lecture-écriture.

L'invention vise en outre à proposer une solution peu gourmande en énergie, ne nécessitant pas d'alimentation spécifique.

L'invention est définie par les revendications 1, 7 et 10.

Pour atteindre ces objets, la présente invention prévoit une antenne de production d'un champ électromagnétique au moyen d'un premier circuit oscillant excité par un signal haute fréquence, comportant, à distance du premier circuit oscillant, un deuxième circuit oscillant, passif, non chargé et dépourvu de noyau magnétique, formant un élément concentrateur du flux magnétique destiné à être capté par un transpondeur au moyen d'un troisième circuit oscillant.

Selon un mode de réalisation de la présente invention, le deuxième circuit oscillant et le premier circuit oscillant ont des fréquences de résonance propres approximativement identiques choisies, de préférence, pour correspondre approximativement à la fréquence du signal d'excitation du premier circuit oscillant.

Selon un mode de réalisation de la présente invention, le deuxième circuit oscillant comporte au moins une inductance plane dont la surface globale s'inscrit dans une surface supérieure à celle dans laquelle s'inscrit une inductance que comporte le troisième circuit oscillant d'un transpondeur destiné à recevoir le flux magnétique.

Selon un mode de réalisation de la présente invention, le deuxième circuit oscillant comporte au moins une inductance plane dont la surface globale s'inscrit dans une surface supérieure ou égale à celle dans laquelle s'inscrit une inductance que comporte le premier circuit oscillant.

Selon un mode de réalisation de la présente invention, l'orientation des plans dans lesquels s'inscrivent des inductances planes des premier et deuxième circuits oscillants est choisie en fonction de zones de fonctionnement privilégié souhaitées.

Selon un mode de réalisation de la présente invention, le concentrateur comporte au moins deux bornes de prélèvement de tension ou de courant.

La présente invention prévoit également un concentrateur de flux magnétique propre à coopérer avec un élément de génération de champ électromagnétique, ce concentrateur étant constitué d'un circuit oscillant pourvu d'une seule inductance en parallèle avec un condensateur.

Selon un mode de réalisation de la présente invention, le concentrateur est constitué de n circuits oscillants à inductances coplanaires.

Selon un mode de réalisation de la présente invention, le concentrateur comporte n inductances coplanaires, en parallèle avec un unique condensateur.

La présente invention prévoit également un système d'échange d'informations entre un transpondeur électromagnétique et une borne de lecture et/ou d'écriture.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, décrite précédemment, représente, de façon très schématique, un schéma électrique d'un système à transpondeur classique ;
la figure 2, décrite précédemment, représente un exemple de formes d'antennes d'un système à transpondeur classique ;
la figure 3, décrite précédemment, représente l'allure des lignes de champ magnétique dans le système classique de la figure 2 ;
la figure 4 représente, de façon très schématique, un premier mode de réalisation d'un dispositif de génération d'un champ électromagnétique selon la présente invention ;
la figure 5 représente, de façon très schématique, l'allure des lignes de champ magnétique générées par le dispositif de la figure 4 ;
la figure 6 représente un schéma électrique simplifié d'un dispositif de génération d'un champ électromagnétique selon un deuxième mode de réalisation de la présente invention ;
la figure 7A représente, vu d'une première face, un concentrateur de flux d'un dispositif selon un troisième mode de réalisation de la présente invention ;
la figure 7B représente, vu d'une deuxième face, le concentrateur de flux de la figure 7A ;
la figure 7C représente un schéma électrique équivalent du concentrateur de flux des figures 7A et 7B ; et
la figure 8 représente une variante du troisième mode de réalisation d'un concentrateur de flux selon la présente invention.

Les mêmes éléments ont été désignés par les mêmes références aux différentes figures. Pour des raisons de clarté, les figures ont été tracées sans respect d'échelle et seuls les éléments d'une borne ou d'un transpondeur qui sont nécessaires à la compréhension de la présente invention ont été représentés aux figures et seront décrits par la suite. En particulier, les circuits de traitement et d'exploitation des informations échangées n'ont pas été détaillés pour être parfaitement classiques. Il s'agira, le plus souvent, de circuits numériques dédiés ou programmables. En outre, l'invention s'applique quel que soit le type de transpondeur (carte de type carte de crédit, étiquette électronique, etc.) qu'il soit ou non pourvu d'un microprocesseur.

Une caractéristique de la présente invention est de prévoir, en association avec un premier circuit oscillant de génération d'un champ électromagnétique, au moins un deuxième circuit oscillant passif et non chargé pour déformer les lignes de champ du premier circuit. Ce deuxième circuit oscillant est un circuit parallèle (bouchon) qui n'alimente aucune charge ni ne reçoit de signal d'excitation électrique.

Une autre caractéristique de la présente invention est que ce circuit résonant propre à l'invention est accordé sur la fréquence de la porteuse d'excitation du premier circuit oscillant. Ainsi, selon l'invention, on prévoit ce que l'on désignera ci-après un concentrateur de flux associé à la borne. Ce concentrateur de flux comprend au moins une antenne plane ayant, de préférence, une taille telle qu'elle s'inscrit dans une surface supérieure ou égale à celle dans laquelle s'inscrit l'antenne L1 de la borne. Selon l'invention, ces antennes sont dépourvues de noyau magnétique pour conduire le flux magnétique de façon à pouvoir les placer à distance l'une de l'autre.

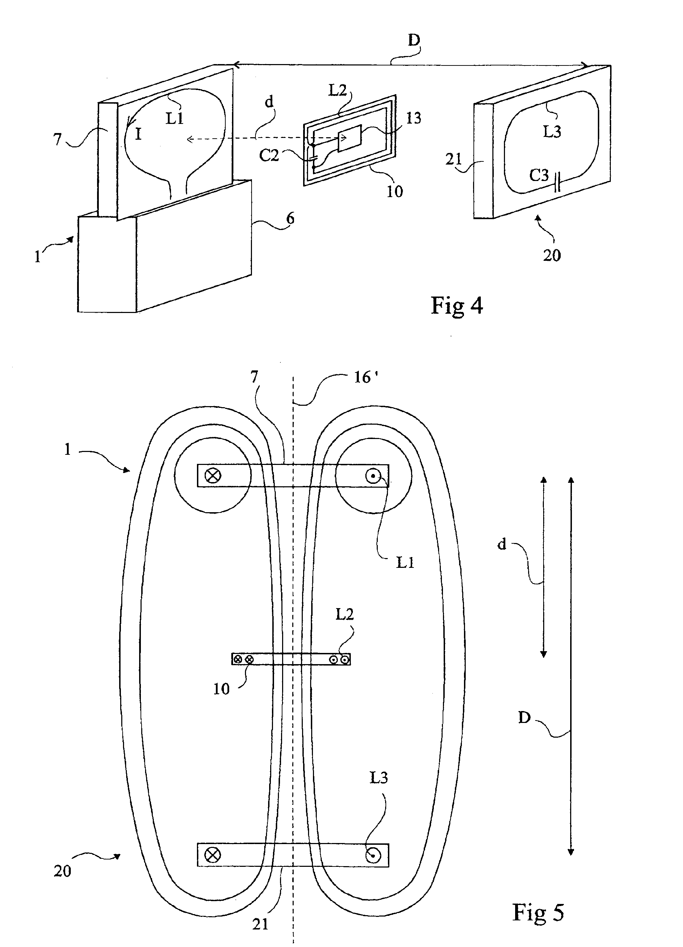

La figure 4 représente, de façon très schématique, un premier mode de réalisation de la présente invention. La représentation de la figure 4 est à rapprocher de celle de la figure 2 décrite précédemment. On y retrouve une borne 1 de lecture et/ou d'écriture destinée à coopérer, par couplage magnétique proche, avec un ou plusieurs transpondeurs électromagnétiques 10.

Dans le mode de réalisation de la figure 4, la borne 1 et le transpondeur 10 ont des structures classiques telles que décrites en relation avec la figure 2.

Selon la présente invention, le dispositif de production de champ électromagnétique comporte, non seulement la borne 1 pourvue du circuit oscillant L1-C1 de génération du champ, mais également au moins un élément 20 concentrateur du flux magnétique. Cet élément 20 constitue un circuit résonnant passif non chargé et non activé électriquement, formé ici d'une inductance L3 dont les deux bornes sont reliées aux électrodes respectives d'un condensateur C3. En pratique, l'inductance L3 pourra être formée, comme l'inductance L1, sur une plaquette de circuit imprimé 21. Le circuit oscillant du concentrateur de flux 20 est, de préférence, accordé sur la même fréquence que le circuit oscillant de la borne 1. En d'autres termes, pour une pulsation ω donnée de la porteuse de téléalimentation, on choisira les composants L3, C3 pour que 1/(L3*C3)=ω². On notera que, pour maximiser la téléalimentation, le circuit oscillant du transpondeur 10 est, de façon classique, également accordé sur la porteuse de téléalimentation. On a donc 1/(L1*C1) = 1/(L2*C2) = 1/(L3*C3) = ω².

On placera un tel concentrateur dans le champ de l'antenne de la borne de sorte que ce concentrateur reçoive ou capte suffisamment de champ pour entretenir sa propre résonance. Cela a pour effet de créer localement (autour du concentrateur) un champ supplémentaire à celui de la borne seule. Toutefois, le concentrateur est placé à distance de la borne, donc du premier circuit oscillant avec lequel il ne partage, de préférence, pas de connexion.

L'orientation du plan dans lequel s'inscrit l'antenne du concentrateur par rapport au plan de l'antenne de la borne peut être utilisée pour privilégier un fonctionnement dans un axe différent de la normale au plan de l'antenne de la borne, ou dans une zone localisée où les lignes de champ sont concentrées.

La figure 5 illustre ce phénomène en représentant une vue schématique en coupe du dispositif de la figure 4 illustrant l'allure des lignes de champ. La représentation de la figure 5 est à rapprocher de celle de la figure 3 décrite précédemment. On voit bien que, grâce au circuit oscillant du concentrateur de flux, les lignes de champ sont étirées dans sa direction, au moins certaines d'entre elles s'entourant autour de son conducteur d'antenne. Il en résulte qu'un transpondeur 10 peut être placé n'importe où entre la borne 1 et le concentrateur 20 en pouvant capter une énergie suffisante à son alimentation. On notera même qu'à l'extrême, un transpondeur peut être téléalimenté en étant placé de l'autre côté mais alors à proximité du concentrateur par rapport à la borne.

Selon l'invention, la distance D séparant le concentrateur 20 de la borne 1 est choisie en fonction des tailles et géométries des antennes L1 et L3. En effet, il existe une distance D maximale entre la borne et le concentrateur au delà de laquelle ce dernier sera sans effet. Cette distance maximale correspond à la distance limite pour laquelle, lorsqu'un transpondeur est placé entre la borne et le concentrateur, ce transpondeur reste téléalimenté sans discontinuité quelle que soit sa position entre la borne et le concentrateur.

Un avantage de la présente invention est que l'accroissement de portée du système est obtenu presque sans consommation supplémentaire. En effet, la seule consommation du concentrateur de flux correspond à la dissipation de ses composants L3 et C3 qui ne sont que faiblement résistifs. Pour un courant I donné d'excitation du circuit oscillant de la borne, la portée d'un système, équipé d'un concentrateur dont la taille de l'antenne correspond à celle de l'antenne L1, est approximativement doublée par rapport à celle d'une borne classique excitée par un même courant.

Un autre avantage de la présente invention est que sa mise en oeuvre ne nécessite aucune modification de la borne ou du transpondeur. En particulier, l'absence de noyau magnétique pour canaliser le flux rend la borne et le concentrateur de flux mécaniquement indépendant l'un de l'autre. Il suffit de placer un concentrateur de flux correctement dimensionné en regard d'une borne à une distance adéquate pour obtenir une augmentation de la portée du système.

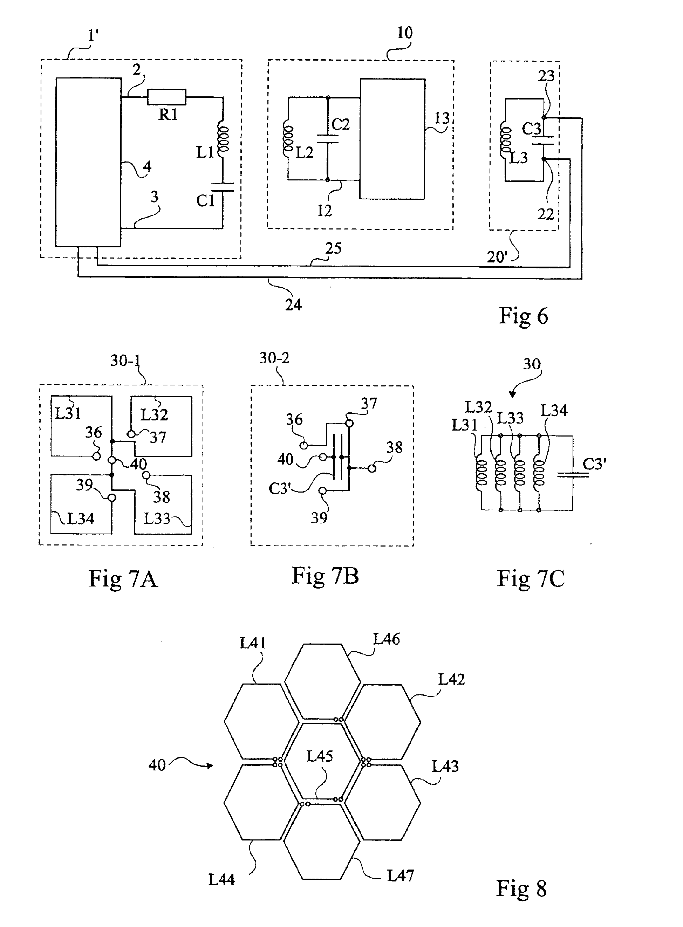

La figure 6 représente, de façon simplifiée, le schéma électrique équivalent d'un dispositif de production d'un champ électromagnétique à destination d'un transpondeur selon un deuxième mode de réalisation de la présente invention. La représentation de la figure 6 est à rapprocher de celle de la figure 1 décrite précédemment.

Une caractéristique de ce deuxième mode de réalisation est que le circuit oscillant du concentrateur de flux 20' est également utilisé comme élément de détection d'éventuelles informations émises par le transpondeur 10. Comme cela a été indiqué précédemment, la transmission d'informations du transpondeur vers le lecteur s'effectue en modulant, au rythme d'une sous-porteuse, la charge constituée par le transpondeur sur le circuit oscillant de la borne. Dans un dispositif à concentrateur de flux de l'invention, cette variation de charge peut être détectée aussi bien côté borne que côté concentrateur. On peut donc prévoir de prélever un signal aux bornes du condensateur C3. Les deux bornes 22 et 23 peuvent alors être reliées (liaisons 24 et 25) au circuit 4 d'exploitation des données de la borne 1' (par exemple, aux bornes d'entrée d'un démodulateur). On veillera toutefois à ce que cette mesure puisse être considérée comme n'affectant pas le caractère non chargé du circuit résonnant du concentrateur.

Selon l'invention, l'antenne du circuit oscillant du concentrateur de flux s'inscrit, de préférence, dans une surface supérieure ou égale à la surface dans laquelle s'inscrit l'antenne de la borne et, de préférence, sensiblement la même surface.

On notera toutefois qu'il est possible de prévoir une antenne L3 de taille globale inférieure à l'antenne L1 pourvu qu'elle soit supérieure à celle de l'antenne L2 d'un transpondeur auquel le système est destiné. On obtient alors un cône de champ convergeant vers le concentrateur qui augmente déjà la portée par rapport à un système classique.

Selon les premier et deuxième modes de réalisation illustrés par les figures 4 et 6, la condition d'encombrement approximativement identique des antennes L1 et L3 est respectée en prévoyant une antenne L3 ayant sensiblement la même forme et taille de l'antenne L1 de la borne 1 ou 1'.

Les figures 7A, 7B et 7C illustrent un troisième mode de réalisation de la présente invention dans lequel la condition de taille indiquée ci-dessus est respectée en prévoyant, côté concentrateur 30, un réseau de plusieurs inductances associées en parallèle au plus chacune à un condensateur. De préférence, on prévoit un seul condensateur pour toutes les inductances du réseau (quatre inductances ayant sensiblement la même taille et la même valeur dans l'exemple des figures 7A à 7C). La figure 7A est une vue d'une première face 30-1 d'une plaquette de circuit imprimé sur laquelle sont, par exemple, réalisées les inductances L31 à L34. La figure 7B est une vue de la deuxième face 30-2 de la plaquette de circuit imprimé. La figure 7C représente le schéma électrique équivalent du concentrateur 30 selon ce troisième mode de réalisation.

Les inductances L31 à L34 sont associées en parallèle avec le condensateur C3'. Comme l'illustre la figure 7A, les quatre inductances sont reliées par une première extrémité sur la première face 30-1 tandis que leurs autres extrémités sont reliées à des via 36, 37, 38 et 39 de liaison à la deuxième face. Côté deuxième face 30-2, les via des deuxièmes extrémités sont reliés ensemble à une première électrode du condensateur C3' dont la deuxième électrode est reliée, par exemple par un via commun 40, aux premières extrémités des inductances. D'autres schémas pourront bien entendu être envisagés pour associer les inductances en parallèle sur le condensateur C3'. Par exemple, si le condensateur C3' est réalisé dans l'épaisseur du circuit imprimé, un seul via peut suffire.

On notera que l'association des inductances en réseau d'antennes doit être telle que toutes les cellules du réseau génèrent des champs dont les lignes s'additionnent (sont toutes dans le même sens).

Un avantage du troisième mode de réalisation est qu'en prévoyant plusieurs circuits oscillants imbriqués et tous accordés sur la fréquence de la porteuse de téléalimentation, les lignes de champ sont plus homogènes entre la borne et le concentrateur, d'où il résulte que l'énergie reçue par le transpondeur dans le champ est également plus homogène pour différentes positions de décalage latéral par rapport à l'axe de symétrie (16', figure 5) du système.

Un autre avantage du troisième mode de réalisation de l'invention est qu'il permet, dans une association en réseau parallèle des inductances du concentrateur et pour une valeur d'inductance résultante L3 donnée, d'augmenter la valeur du condensateur C3' à utiliser. En effet, la relation 1/(L3*C3') = ω² doit être respectée. En supposant que les inductances L31, L32, L33 et L34 ont toutes les mêmes valeurs, il en résulte dans l'exemple ci-dessus que le condensateur C3' doit avoir une valeur de 4*C3. Un avantage est que l'on garantit la faisabilité du concentrateur. En effet, en raison des fréquences importantes (plusieurs dizaines de MHz) de la porteuse et de la taille (géométrique) de l'inductance requise, la valeur du condensateur peut devenir inférieure à la capacité parasite de l'inductance, rendant la réalisation impossible. En diminuant la taille des antennes individuelles, on facilite la réalisation du concentrateur en autorisant le recours à un ou plusieurs condensateurs de capacité plus importante, donc plus facilement supérieure aux capacités parasites respectives des antennes.

Un autre avantage est qu'en diminuant la valeur de l'inductance équivalente, on diminue la surtension développée à ses bornes et, par conséquent, le champ électrique parasite qui en résulte.

Le recours à un réseau d'antennes trouve un intérêt, notamment (mais pas exclusivement), dans les systèmes de type portique où le respect de la condition de taille globale par rapport à l'antenne L1 de la borne conduit un condensateur C3 trop . petit.

On notera que, en variante, le concentrateur peut être constitué de plusieurs circuits oscillants indépendants les uns des autres, dont les inductances respectives sont également diminuées par rapport au cas d'une seule antenne et dont les condensateurs respectifs associés à chaque inductance peuvent donc également être plus grand qu'avec une seule inductance ayant la même taille globale. En effet, chaque circuit oscillant doit respecter la condition d'accord sur la fréquence de la téléalimentation.

La figure 8 représente schématiquement une vue de face de l'antenne 40 d'un concentrateur selon une autre variante du troisième mode de réalisation de l'invention. Chaque inductance L41, L42, L43, L44, L45, L46 et L47 individuelle a la forme d'un hexagone pour retrouver une structure en nid d'abeille à, par exemple, sept cellules. Une telle structure optimise l'homogénéité des lignes de champs. Pour simplifier, les interconnexions des inductances avec le ou les condensateurs n'ont pas été représentées. Ces interconnexions se déduisent de l'exposé des figures précédentes.

On notera qu'une association en réseau de plusieurs circuits oscillants telle qu'illustrée par les figures 7 et 8 peut être effectuée également en associant en série les inductances. En particulier, l'avantage d'homogénéiser les lignes de champ est indépendant du type d'association (parallèle ou série) des inductances du concentrateur.

Bien entendu, la présente invention est susceptible de diverses variantes et modifications qui apparaîtront à l'homme de l'art. En particulier, le dimensionnement des inductances sera choisi en fonction de l'application et, notamment, du circuit oscillant de la borne à laquelle est destiné le concentrateur. Par exemple, après avoir déterminé la taille de l'antenne ou des antennes et la valeur du condensateur, on fixe le nombre de spires des antennes en fonctions des inductances souhaitées pour respecter l'accord. De plus, le choix de la géométrie (circulaire, rectangulaire, etc.) des antennes peut dépendre de facteurs (par exemple, le lieu d'implantation, la forme de la borne, etc.) autres que ceux de la présente invention. En outre, on notera que la mise en oeuvre de l'invention n'exclut pas d'augmenter légèrement la puissance d'excitation du circuit oscillant de la borne. Une telle augmentation peut servir, par exemple, à compenser les pertes résistives dans le concentrateur pour obtenir, au moyen d'une antenne de taille globale identique, un doublement effectif de la portée. Enfin, il sera clair pour l'homme du métier que la distance entre les circuits oscillants, c'est-à-dire essentiellement entre les antennes dépend entre autres de l'application et des nombres, dimensions, valeurs des inductances et condensateurs des circuits oscillants. Cette distance est, de préférence, supérieure à une distance nulle ou de contact mécanique entre les enroulements et inférieure. La distance limite pour laquelle un transpondeur reste téléalimenté quelle que soit sa position entre la borne et le concentrateur. Par exemple, la distance D sera comprise entre 10 cm et 1 m.

Parmi les applications de la présente invention, on signalera plus particulièrement les lecteurs (par exemple, les bornes ou portiques de contrôle d'accès, les distributeurs automatiques de produits, les terminaux d'ordinateurs, les terminaux téléphoniques, les téléviseurs ou décodeurs satellites, etc.) de cartes à puce sans contact (par exemple les cartes d'identification pour contrôle d'accès, les cartes porte-monnaie électroniques, les cartes de stockage d'informations sur le possesseur de la carte, les cartes de fidélité de consommateurs, les cartes de télévision à péage, etc.).

## Revendications

1. Dispositif de production d'un champ électromagnétique au moyen d'un premier circuit oscillant (L1, C1) excité par un signal haute fréquence, **caractérisé en ce qu'**il comporte, à distance du premier circuit oscillant, un deuxième circuit oscillant (L3, C3 ; L31, L32, L33, L34 ; L41, L42, L43, L44, L45, L46, L47), passif, non chargé et dépourvu de noyau magnétique, formant un élément (20, 20' ; 30 ; 40) concentrateur du flux magnétique destiné à être capté par un transpondeur (10) au moyen d'un troisième circuit oscillant (L2, C2), le deuxième circuit oscillant comportant plusieurs inductances coplanaires.

2. Dispositif selon la revendication 1, **caractérisé en ce que** le deuxième circuit oscillant (20, 20' ; 30 ; 40) et le premier circuit oscillant (L1, C1) ont des fréquences de résonance propres approximativement identiques choisies, de préférence, pour correspondre approximativement à la fréquence du signal d'excitation du premier circuit oscillant (L1, C1).

3. Dispositif selon la revendication 1 ou 2, **caractérisé en ce que** le deuxième circuit oscillant comporte au moins une inductance plane (L3 ; L31, L32, L33, L34 ; L41, L42, L43, L44, L45; L46, L47) dont la surface globale s'inscrit dans une surface supérieure à celle dans laquelle s'inscrit une inductance (L2) que comporte le troisième circuit oscillant d'un transpondeur (10) destiné à recevoir le flux magnétique.

4. Dispositif selon l'une quelconque des revendications 1 à 3, **caractérisé en ce que** le deuxième circuit oscillant comporte au moins une inductance plane (L3 ; L31, L32, L33, L34 ; L41, L42, L43, L44, L45, L46, L47) dont la surface globale s'inscrit dans une surface supérieure ou égale à celle dans laquelle s'inscrit une inductance (L1) que comporte le premier circuit oscillant.

5. Dispositif selon la revendication 4, **caractérisé en ce que** l'orientation des plans dans lesquels s'inscrivent des inductances planes des premier et deuxième circuits oscillants est choisie en fonction de zones de fonctionnement privilégié souhaitées.

6. Dispositif selon l'une quelconque des revendications 1 à 5, **caractérisé en ce que** le concentrateur (20') comporte au moins deux bornes (22, 23) de prélèvement de tension ou de courant.

7. Concentrateur de flux magnétique propre à coopérer avec un élément (1, 1') de génération de champ électromagnétique dans un dispositif conforme à l'une quelconque des revendications 1 à 6, **caractérisé en ce qu'**il est constitué d'un circuit oscillant pourvu d'une seule inductance (L3) en parallèle avec un condensateur (C3').

8. Concentrateur de flux magnétique propre à coopérer avec un élément (1, 1') de génération de champ électromagnétique dans un dispositif conforme à l'une quelconque des revendications 1 à 6, **caractérisé en ce qu'**il est constitué de n circuits oscillants à inductances coplanaires.

9. Concentrateur de flux magnétique propre à coopérer avec un élément (1, 1') de génération de champ électromagnétique dans un dispositif conforme à l'une quelconque des revendications 1 à 6, **caractérisé en ce qu'**il comporte n inductances (L31, L32, L33, L34 ; L41, L42, L43, L44, L45, L46, L47) coplanaires, en parallèle avec un unique condensateur (C3').

10. Système d'échange d'informations entre un transpondeur électromagnétique (10) et une borne (1, 1') de lecture et/ou d'écriture, **caractérisé en ce qu'**il comporte un dispositif de production de champ électromagnétique conforme à l'une quelconque des revendications 1 à 6.

11. Système selon la revendication 10, **caractérisé en ce que** son dispositif de production de champ électromagnétique comprend un concentrateur conforme à l'une quelconque des revendications 7 à 9.

## Claims

1. A device for generating an electromagnetic field by a first oscillating circuit (L1, C1) excited by a highfrequency signal, **characterized in that** it includes, at a distance from the first oscillating circuit, a second passive and unloaded oscillating circuit (L3, C3; L31, L32, L33, L34; L41, L42, L43, L44, L45, L46, L47), forming an element (20, 20'; 30; 40) for concentrating the magnetic flux intended to be received by a transponder (10) by a third oscillating circuit (L2, C2), the second oscillating circuit comprising a plurality of coplanar inductances.

2. The device of claim 1, **characterized in that** the second oscillating circuit (20, 20'; 30; 40) and the first oscillating circuit (L1, C1) have approximately identical natural resonance frequencies chosen, preferably, to approximately correspond to the frequency of the excitation signal of the first oscillating circuit (L1, C1).

3. The device of claim 1 or 2, **characterized in that** the second oscillating circuit includes at least one planar inductance (L3; L31, L32, L33, L34; L41, L42, L43, L44, L45, L46, L47), the general surface area of which is inscribed in a surface area greater than that in which is inscribed an inductance (L2) included in the third oscillating circuit of a transponder (10) intended for receiving the magnetic flux.

4. The device of any of claims 1 to 3, **characterized in that** the second oscillating circuit includes at least one planar inductance (L3; L31, L32, L33, L34; L41, L42, L43, L44, L45, L46, L47), the general surface area of which is inscribed in a surface area greater than or equal to that in which is inscribed an inductance (L1) included in the first oscillating circuit.

5. The device of claim 4, **characterized in that** the orientation of the planes in which are inscribed planar inductances of the first and second oscillating circuits is chosen according to desired privileged operating areas.

6. The device of any of claims 1 to 5, **characterized in that** the concentrator (20') includes at least two voltage or current sampling terminals (22, 23).

7. A magnetic flux concentrator adapted to cooperating with an element (1, 1') for generating an electromagnetic field in the device of any of claims 1 to 6, **characterized in that** it is formed of an oscillating circuit provided with a single inductance (L3) in parallel with a capacitor (C3').

8. A magnetic flux concentrator adapted to cooperating with an element (1, 1') for generating an electromagnetic field in the device of any of claims 1 to 6, **characterized in that** it includes n oscillating circuits with coplanar inductances.

9. A magnetic flux concentrator adapted to cooperating with an element (1, 1') for generating an electromagnetic field in the device of any of claims 1 to 6, **characterized in that** it includes n coplanar inductances (L31, L32, L33, L34; L41, L42, L43, L44, L45, L46, L47), in parallel with a single capacitor (C3').

10. A system of information exchange between an electromagnetic transponder (10) and a read and/or write terminal (1, 1'), **characterized in that** it includes the device for generating an electromagnetic field of any of claims 1 to 6.

11. The system of claim 10, **characterized in that** the electromagnetic field generation device includes the concentrator of any of claims 7 to 9.

## Patentansprüche

1. Vorrichtung zum Erzeugen eines elektromagnetischen Feldes durch einen ersten Schwingkreis (L1, C1) der durch ein Hochfrequenzsignal angeregt wird, **dadurch gekennzeichnet dass** sie in einem Abstand vom ersten Schwingkreis einen zweiten, passiven und unbelasteten Schwingkreis (L3, C3; L31, L32, L33, L34; L41, L42, L43, L44, L45, L46, L47) aufweist, der ein Element (20, 20'; 30; 40) bildet, zum Konzentrieren des magnetischen Flusses, der von einem Transponder (10) durch einen dritten Schwingkreis (L2, C2) empfangen werden soll, wobei der zweite Schwingkreis eine Vielzahl von koplanaren Induktivitäten aufweist.

2. Vorrichtung nach Anspruch 1, **dadurch gekennzeichnet dass** der zweite Schwingkreis (20, 20'; 30; 40) und der erste Schwingkreis (L1, C1), annähernd identische Eigenresonanzfrequenzen besitzen, die vorzugsweise derart ausgewählt sind, dass sie annähernd der Frequenz des Anregungssignals des ersten Schwingkreises (L1, C1) entsprechen.

3. Vorrichtung nach Anspruch 1 oder 2, **dadurch gekennzeichnet dass** der zweite Schwingkreis wenigstens eine ebene Induktivität (L3; L31, L32, L33, L34; L41, L42, L43, L44, L45, L46, L47) aufweist, wobei deren genereller Oberflächenbereich einbeschrieben ist in einer Oberfläche, die größer als diese ist und in welcher eine Induktivität (L2) einbeschrieben ist, die in dem dritten Schwingkreis eines Transponders (10) enthalten ist, der zum empfangen des magnetischen Flusses vorgesehen ist.

4. Vorrichtung nach einem der Ansprüche 1 bis 3, **dadurch gekennzeichnet dass** der zweite Schwingkreis wenigstens eine ebene Induktivität (L3; L31, L32, L33, L34; L41, L42, L43, L44, L45, L46, L47) aufweist, wobei deren genereller Oberflächenbereich in einer Oberfläche einbeschrieben ist, die größer oder gleich ist, wie die in der eine Induktivität (L1) einbeschrieben ist, die der erste Schwingkreis aufweist.

5. Vorrichtung nach Anspruch 4, **dadurch gekennzeichnet, dass** die Orientierung der Ebenen, in welchen ebene Induktivitäten des ersten und zweiten Schwingkreises einbeschrieben sind, so gewählt ist, dass sie gewünschten bevorzugten Arbeitsbereichen entspricht.

6. Vorrichtung nach einem der Ansprüche 1 bis 5, **dadurch gekennzeichnet dass** der Konzentrator (20') wenigstens zwei Spannungs- oder Stromabtastanschlüsse (22, 23) aufweist.

7. Magnetfluss Konzentrator, der geeignet ist mit einem Element (1, 1'), zum Erzeugen eines elektromagnetischen Feldes in der Vorrichtung nach einem der Ansprüche 1 bis 6, zusammenzuwirken, **dadurch gekennzeichnet dass** er durch einen Schwingkreis gebildet ist, der mit einer einzelnen Induktivität (L3) parallel zu einem Kondensator (C3') versehen ist.

8. Magnetfluss Konzentrator, der geeignet ist mit einem Element (1, 1'), zum Erzeugen eines elektromagnetischen Feldes in der Vorrichtung nach einem der Ansprüche 1 bis 6, zusammenzuwirken, **dadurch gekennzeichnet dass** er n Schwingkreise mit koplanaren Induktivitäten aufweist.

9. Magnetischer Fluss Konzentrator, der geeignet ist mit einem Element (1, 1'), zum Erzeugen eines elektromagnetischen Feldes in der Vorrichtung nach einem der Ansprüche 1 bis 6, zusammenzuwirken, **dadurch gekennzeichnet dass** er n koplanare Induktivitäten (L31, L32, L33, L34; L41, L42, L43, L44, L45, L46, L47) aufweist, die parallel zu einem einzelnen Kondensator (C3') sind.

10. Ein System zum Informationsaustausch zwischen einem elektromagnetischen Transponder (10) und einem Lese- und/oder Schreibanschluss (1, 1'), **dadurch gekennzeichnet dass** es die Vorrichtung zum Erzeugen eines elektromagnetischen Feldes nach einem der Ansprüche 1 bis 6 aufweist.

11. System nach Anspruch 10, **dadurch gekennzeichnet dass** die Vorrichtung zum Erzeugen des elektromagnetischen Feldes den Konzentrator nach einem der Ansprüche 7 bis 9 aufweist.
